# EUROPEAN PATENT APPLICATION

(11) **EP 2 116 491 A1**
(43) Date of publication of application: **11.11.2009**
(21) Application number: 07860216.6
(22) Date of filing: 26.12.2007
(51) Int. Cl.: B65G 61/00, G06Q 50/00

(54) **PHYSICAL DISTRIBUTION CONTAINER MANAGEMENT SYSTEM**

(30) Priority: 02.03.2007 JP 2007053185
(71) Applicant: Japan Pallet Rental Corporation, Tokyo 103-0025 (JP)
(72) Inventor: KANO, Naomi, Tokyo 103-0025 (JP)
(74) Representative: Walker, Stephen
(86) International application number: PCT/JP2007/074987
(87) International publication number: WO 2008/108050

(57) **Abstract**

It is an object of the present invention to provide a physical distribution container management system that can properly manage shipment and receipt of physical distribution containers, even if the physical distribution containers are shipped and received between a site performing individual management of physical distribution containers and a site performing total volume management.

The physical distribution container management system 1 includes a physical distribution container management server 10 that manages the physical distribution container 3 shipped and received between a plurality of sites 2, and the physical distribution container management server 10 has: a shipment information input unit 12 that inputs, together with a slip number, a container identification number associated with the slip number specifying the physical distribution container 3 shipped from the shipping site 2a; a number-of-pieces determining unit 14 that determines the number of shipped physical distribution containers 3 from the container identification number; a receipt information input unit 13 that inputs information indicating the number of received physical distribution containers 3 at the receiving site 2b associated with the slip number; a shipment-and-receipt information management unit 15 that performs matching between the number of shipments and the number of receipts; and an output unit 18 that outputs a result of matching.

## Description

### Technical Field

The present invention relates to a physical distribution container management system that manages distribution containers shipped and received between a plurality of sites.

### Background Art

Physical distribution containers such as palettes have been used for collectively transporting items to be transported in order to improve efficiency of transportation. As a usage of such physical distribution containers, there is a so-called rental system of physical distribution containers, in which items to be transported that have been loaded on a physical distribution container depart from the shipping site of a company and, after the items to be transported are unloaded at the receiving site of the company, another company uses the physical distribution container. With shared use of physical distribution containers among different companies, respective companies can eliminate space for keeping physical distribution containers, thereby improving efficiency.

In a system such as a physical distribution container rental system described above that performs shipment and receipt of physical distribution containers between the sites, a physical distribution container management system is used, comprising an information processor to precisely manage the number of physical distribution containers shipped and received at each of the sites (see patent document 1, for example).
Patent Document 1: Japanese Patent Laid-Open No. 2003-246456

### Disclosure of the Invention

### Problem to be Solved by the Invention

There has been performed a so-called individual management of physical distribution containers which identifies and manages physical distribution containers individually by attaching RFID tags to the physical distribution containers. At a site where such individual management of physical distribution containers is performed, physical distribution containers are usually managed by identification information acquired from the physical distribution container by an RFID reader, instead of the number of physical distribution containers. On the other hand, at a site having no RFID reader installed therein and performing the so-called total volume management of physical distribution containers by which management is performed based on the number of physical distribution containers, identification information of the physical distribution containers cannot be used.

Because management methods of physical distribution containers have been different between a site performing individual management of physical distribution containers and a site performing total volume management, there has been a problem that the physical distribution container management system described above cannot properly manage the number of shipped and received between sites.

It is an object of the present invention, which has been conceived to solve the above-mentioned problems, to provide a physical distribution container management system that can properly manage shipment and receipt of physical distribution containers, even if the physical distribution containers are shipped and received between a site performing individual management of physical distribution containers and a site performing total volume management.

### Means for Solving the Problem

In order to achieve the above object, the present invention provides a physical distribution container management system that manages physical distribution containers shipped and received between a plurality of sites, the system comprising: shipment-and-receipt information input means for inputting shipment-and-receipt-specific information that specifies shipment and receipt of physical distribution containers; shipped-container information input means for inputting container-specific information that specifies physical distribution containers shipped from a shipping site relating to the shipment and receipt, in association with the shipment-and-receipt-specific information; number-of-shipments determining means for determining, from the container-specific information input by the shipped-container information accepting means, number of the shipped physical distribution containers from the shipping site for each of the shipments and receipts; number-of-receipts input means for inputting information indicating number of the received physical distribution containers at a receiving site relating to the shipment and receipt, in association with the shipment-and-receipt-specific information; number-of-shipments-and-receipts matching means for matching the number of shipments determined by the number-of-shipments determining means and the number of receipts relating to information input by the number-of-receipts input means, for each of the shipments and receipts; and shipment-and-receipt output means for outputting a result of matching by the number-of-shipments-and-receipts matching means.

In the physical distribution container management system according to the present invention, container-specific information is input with regard to physical distribution container to be shipped, and the number of shipments is determined by the container-specific information. With regard to the physical distribution containers received, on the other hand, the number of containers received is input. In the physical distribution container management system, the number of shipments is matched with the number of those received, and the result of matching is output. With the physical distribution container system according to the present invention, therefore, input can be provided in a manner suited to the management style, if the shipping side is managing individual containers and the receiving side is managing the total volume, whereby shipment and receipt of physical distribution containers are properly managed according to the input.

It is preferred that the system further comprises a reader that reads the container-specific information from a medium attached to the physical distribution container and storing the container-specific information relating to the physical distribution container, and inputs the information in the shipped-container information input means. The present invention can be easily implemented according to this arrangement, because the container-specific information can be easily acquired from the physical distribution container and input in the shipped-container information input means at a site performing individual management.

In order to achieve the above object, the present invention provides a physical distribution container management system that manages physical distribution containers shipped and received between a plurality of sites, the system comprising: shipment-and-receipt information input means for inputting shipment-and-receipt-specific information that specifies shipment and receipt of physical distribution containers; number-of-shipments input means for inputting information indicating the number of shipped physical distribution containers from a shipping site relating to the shipment and receipt, in association with the shipment-and-receipt-specific information; received-container information input means for inputting container-specific information that specifies physical distribution containers received at a receiving site relating to the shipment and receipt, in association with the shipment-and-receipt-specific information; number-of-receipts determining means for determining, from the container-specific information input by the received-container information accepting means, number of the received physical distribution containers at the receiving site for each of the shipments and receipts; matching means for matching the number of shipped containers relating to information input by the number-of-shipments input means and number of received containers determined by the number-of-receipts determining means for each of the shipments and receipts; and output means for outputting a result of matching by the matching means.

In the physical distribution container management system according to the present invention, the number of shipments is input with regard to the physical distribution containers that are shipped. On the other hand, container-specific information is input with regard to the physical distribution containers received, and the number of receipts is determined by the container-specific information. In the physical distribution container management system, the number of receipts is matched with the number of shipment, and the result of matching is output. According to the physical distribution container system of the present invention, therefore, input can be provided in a manner suited to the management style, if the shipping side is performing total volume management and the receiving side is performing individual management, whereby shipment and receipt of physical distribution containers can be properly managed according to the input.

It is preferred that the system further comprises a reader that reads the container-specific information from a medium attached to the physical distribution container and storing the container-specific information relating to the physical distribution container, and inputs the information in the received-container information input means. The present invention can be easily implemented according to this arrangement, because the container-specific information can be easily acquired from the physical distribution container and input in the received-container information input means at a site performing individual management.

The shipment-and-receipt-specific information contains information that identifies the shipping site and receiving site relating to the shipment and receipt, and it is preferred that the system further comprises inventory information storage means for storing, based on the input container-specific information, the container-specific information relating to the physical distribution containers that are in inventory at each of the sites; containers-in-inventory information input means for inputting the container-specific information relating to the physical distribution containers that are in inventory at each of the sites; inventory matching means for matching the container-specific information input by the containers-in-inventory information input means and the container-specific information stored by the inventory information storage means; and inventory output means for outputting a result of matching by the inventory matching means. According to the above arrangement, matching between inventory and management information thereof, in other words, inventory-counting can be easily performed at a site performing individual management.

### Effects of the Invention

According to the present invention, input can be provided in a manner suited to the management style of physical distribution containers at a site which ships and receives physical distribution containers, whereby shipment and receipt of physical distribution containers can be properly managed even if the physical distribution containers are shipped and received between a site performing individual management of physical distribution containers and a site performing total volume management.

### Brief Description of the Drawings

Fig. 1 illustrates an arrangement of a physical distribution container management system according to an embodiment of the present invention.
Fig. 2 illustrates an example of data transmitted to a physical distribution container management server from each site.
Fig. 3 illustrates an example of data stored in a database of the physical distribution container management server.
Fig. 4 is a flow chart illustrating a process performed at the time of shipment and receipt in the physical distribution container management system according to an embodiment of the present invention.
Fig. 5 illustrates an exemplary display screen on a terminal at the receiving side.
Fig. 6 is a flow chart illustrating another exemplary process performed at the time of shipment and receipt in the physical distribution container management system according to an embodiment of the present invention.
Fig. 7 is a flow chart illustrating an exemplary process performed at the time of inventory-counting in the physical distribution container management system according to an embodiment of the present invention.
Fig. 8 illustrates transition of information when performing inventory-counting.

### Description of the Reference Symbols

1:physical distribution container management system, 2:site, 3:physical distribution container, 4:RFID tag, 10:physical distribution container management server, 11:database, 12:shipment information input unit, 13:receipt information input unit, 14:number-of-pieces determining unit, 15:shipment-and-receipt information management unit, 16:inventory information input unit, 17:inventory information management unit, 18:output unit, 20:terminal, 21:RFID reader.

### Best Modes for Carrying Out the Invention

A preferred embodiment of a physical distribution container management system according to the present invention will be described in detail below, referring to the drawings. Here, identical components are provided with identical reference numerals in the description of the drawings, with duplicate explanation being omitted.

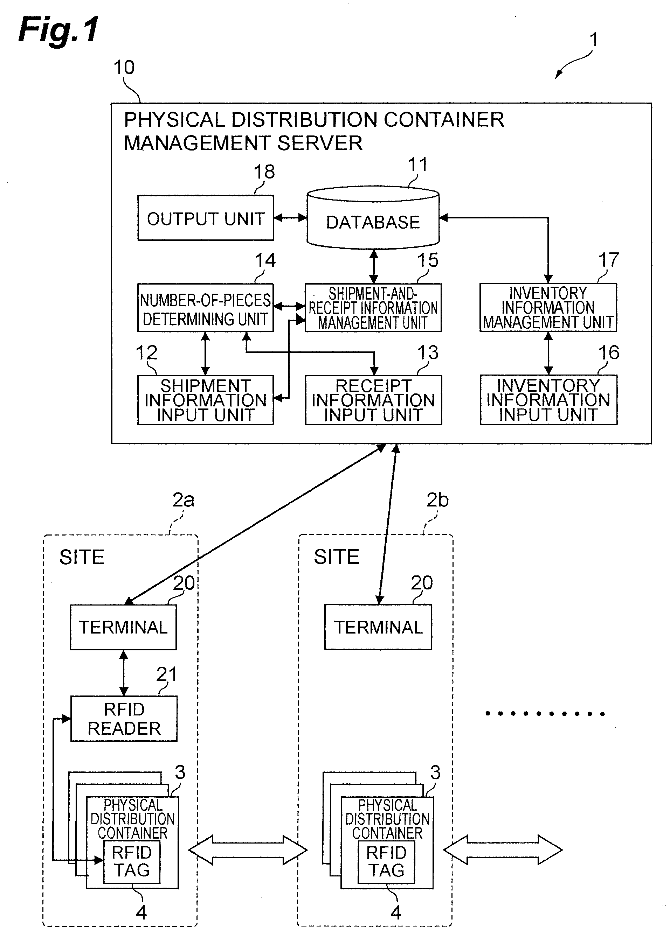

Fig. 1 illustrates an arrangement of a physical distribution container management system according to an embodiment of the present invention. The physical distribution container management system 1 is a system that manages physical distribution containers 3 shipped and received between a plurality of sites 2 (collective designation of sites 2a and 2b in Fig. 1). A physical distribution container 3 is a load-carrying platform or a container used for transporting items, such as a palette or container, specifically. Although "number-of-pieces" is mainly used in the present embodiment as the unit of the physical distribution container 3, "number of sheets" may also be used. The physical distribution container 3 has an RFID tag 4 attached thereto bearing a container identification number, which is the container-specific information that uniquely identifies each physical distribution container 3. Specifically, GRAI (Global Returnable Asset Identifier) can be used as the container identification number, for example. It is preferred that the container identification number not only identifies the physical distribution container 3, but also is capable of identifying the type of the physical distribution container 3 such as a palette or container.

The physical distribution container management system 1 comprises a physical distribution container management server 10, and a terminal 20 and a RFID reader 21 installed at each of the sites 2. The physical distribution container management server 10 receives information relating to shipment and receipt of the physical distribution container 3 from the terminal 20 and manages the information. In addition, the physical distribution container management server 10 transmits information relating to shipment and receipt of the physical distribution container 3 to the terminal 20, if necessary. The physical distribution container management server 10 is connected to the terminal 20 via a communication network such as the Internet, and capable of transmitting and receiving information between the terminal 20 connected to the communication network. The physical distribution container management server 10 has a function as a Web server and it is preferred that transmission and reception of information between the physical distribution container management server 10 and the terminal 20 is performed using HTTP (Hyper Text Transfer Protocol). Specifically, the physical distribution container management server 10 is implemented by a computer such as a PC (Personal Computer) or a server device comprising hardware including a CPU (Central Processing Unit), a memory, a data communication module or the like. These components are operated by a program or the like to exhibit the functionality of the physical distribution container management server 10 described below.

The terminal 20, which is installed at each of the sites 2, transmits and receives information to and from the physical distribution container management server 10. The terminal 20 is used by a user such as the supervisor of each site for inputting and outputting information as necessary. Specifically, the terminal 20 corresponds to an information terminal or a cellular phone carried by the user, for example, comprising hardware including a CPU, a memory, a data communication module or the like. In addition, the terminal 20 comprises an input device such as a keyboard for inputting information and a display unit such as a display for outputting information.

The RFID reader 21 reads container-specific information from the RFID tag 4 attached to the physical distribution container 3. The RFID reader 21 can transmit and receive information between the terminal 20 and transmits the read-out container-specific information to the terminal 20. The information read by the RFID reader 21 is transmitted from the terminal 20 to the physical distribution container management server 10. The information transmitted from the terminal 20 to the physical distribution container management server 10 is transmitted using a predefined format such as XML (Extensible Markup Language), for example.

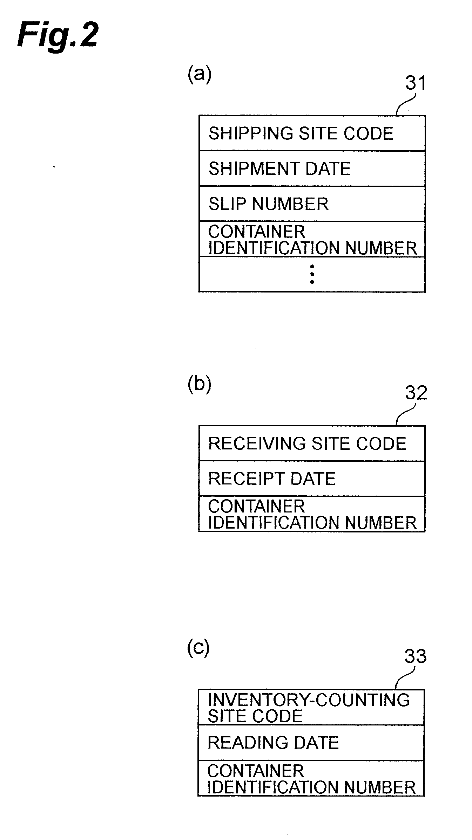

As shown in Fig. 2 (a), the information 31 transmitted from the terminal 20 to the physical distribution container management server 10 at the time of shipment has associated therewith each of: "shipping site code" identifying the shipping site (site 2 where container-specific information is read by the RFID reader 21); "shipment date" indicating the date when the physical distribution container 3 is shipped (the date when container-specific information is read by the RFID reader 21); and "slip number" which is the shipment-and-receipt-specific information that identifies shipment and receipt relating to the shipment; and "container identification number". Since the "container identification number" includes all the information relating to shipment, more than one thereof may exist.

Here, the sites 2 can be divided into a site 2a having the RFID reader 21 installed therein and a site 2b having no RFID reader 21 installed therein. Since the container-specific information of each physical distribution container 3 can be acquired at the site 2a having the RFID reader installed therein, individual management is possible. On the other hand, because container-specific information of each physical distribution container 3 cannot be acquired at the site 2b having no RFID reader 21 installed therein, total volume management is performed.

As shown in Fig. 2 (b), the information 32 transmitted from the terminal 20 to the physical distribution container management server 10 at the time of receipt has associated therewith each of: "receiving site code" identifying the receiving site (site 2 where container-specific information is read by the RFID reader 21); "shipment date" indicating the date when the physical distribution container 3 is received (the date when container-specific information is read by the RFID reader 21); and "container identification number". At the time of receipt, a single "container identification number" is associated with a single piece of information 32.

As shown in Fig. 2 (c), the information 33 transmitted from the terminal 20 to the physical distribution container management server 10 at the time of inventory-counting has associated therewith each of: "inventory-counting site code" indicating the site that performs inventory-counting (site 2 that read the container-specific information by the RFID reader 21); "reading date" indicating the date when the container-specific information is read by the RFID reader 21; and "container identification number". At the time of inventory-counting, a single "container identification number" is associated with a single piece of information 32.

The foregoing is information transmitted from the site 2a to the physical distribution container management server 10 when a container identification number is read from the physical distribution container 3 by the RFID reader 21 in the site 2a having the RFID reader 21 installed therein, i.e. the site 2a performing individual management. Information transmitted at other timings and information transmitted to the physical distribution container management server 10 from the site 2b performing total volume management will be described below.

Subsequently, functions of the physical distribution container management server 10 of the physical distribution container management system 1 will be described. As shown in Fig. 1, the physical distribution container management server 10 comprises a database 11, a shipment information input unit 12, a receipt information input unit 13, a number-of-pieces determining unit 14, a shipment-and-receipt information management unit 15, an inventory information input unit 16, an inventory information management unit 17, and an output unit 18.

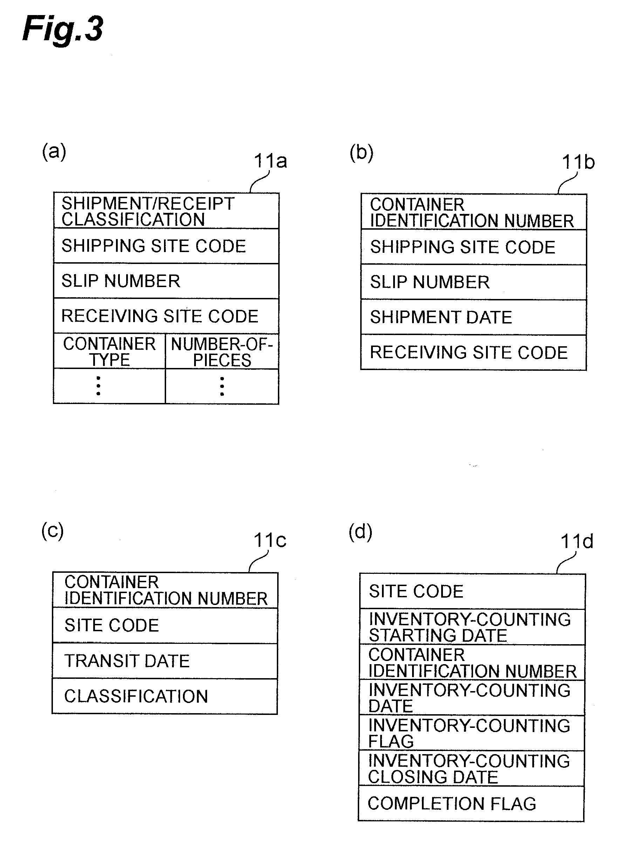

The database 11 is the means for storing data that manages shipment and receipt of the physical distribution container 3. Information relating to shipment and receipt is managed based on the number of physical distribution container 3 shipped and received at each of the sites 2, and the container identification number. The database 11 is also the inventory information storage means for storing, from the above-mentioned shipment-and-receipt information, container identification number relating to physical distribution container 3 that are in inventory at each of the sites 2. Fig. 3 illustrates information 11a to 11 d stored in the database 11.

The shipment-and-receipt information 11a shown in Fig. 3 (a), generated when the physical distribution container 3 is shipped and received, is information for managing shipment and receipt. Information that is managed by the shipment-and-receipt information 11a is the "number" of physical distribution container 3 shipped and received. Specifically, the shipment-and-receipt information 11a has associated therewith each of: "shipment/receipt classification" indicating classification of "shipment" or "receipt"; "shipping site code"; "slip number"; "receiving site code"; "container type" indicating the type of the physical distribution container 3 relating to the shipment and receipt; and "number-of-pieces" indicating the number of physical distribution container 3 shipped and received for each "container type". If a plurality of types of physical distribution containers 3 are shipped and received in a single shipment and receipt, a plurality of "container types" and "number-of-pieces" are included in a piece of shipment-and-receipt information 11a. In addition, information indicating whether or not a slip has already been issued may be included in the shipment-and-receipt information 11a.

The receipt-waiting-container information 11b shown in Fig. 3 (b), generated for each physical distribution container 3 at the time of shipment and receipt, is information for individually managing the physical distribution containers that are shipped and received. The receipt-waiting-container information 11b has associated therewith each of: "container identification number", "shipping site code", "slip number", "shipment date", and "receiving site code.

The container-location information 11c shown in Fig. 3 (c), being the information for managing at which site the physical distribution container 3 is located, is referred to when performing inventory-counting or the like. The container-location information 11c is preliminarily prepared for each physical distribution container 3. The container-location information 11c has associated therewith each of: "container identification number"; "site code" indicating the site 2 where the physical distribution container 3 relating to the "container identification number" is located; "transit date" indicating the date of receipt at the site 2; and "classification" indicating classification of the state of the physical distribution container 3 such as "receipt", "inventory-counting" or the like.

The inventory-counting container information 11d shown in Fig. 3 (d), generated for each physical distribution container 3 when performing inventory-counting, is information for managing the state of the physical distribution container 3 when performing inventory-counting. The inventory-counting container information 11d has associated therewith each of: "site code" indicating the site 2 where inventory-counting is performed; "inventory-counting starting date" indicating the date when inventory-counting is started; "container identification number"; "inventory-counting date" indicating the date when inventory-counting is performed; "inventory-counting flag" indicating whether or not inventory-counting is performed; "inventory-counting closing date" indicating the date when inventory-counting is completed; and "completion flag" indicating whether or not inventory-counting has been completed.

Generation and storage of information in the database 11 are performed by the shipment-and-receipt information management unit 15 and the inventory information management unit 17. In addition, information in the database 11 is referred to by the output unit 18, if necessary. Besides the above-mentioned information, history information such as transportation history of the physical distribution container 3, for example, may also be stored in the database 11.

The shipment information input unit 12 is the shipment-and-receipt information input means for receiving, from the terminal 20 of the shipping site 2 as shipment-and-receipt information, and inputting "slip number" which is the shipment-and-receipt-specific information and the shipping site code and the receiving site code relating to the shipment and receipt. The shipment information input unit 12 outputs the received shipment-and-receipt information to the shipment-and-receipt information management unit 15.

In addition, the shipment information input unit 12 is also the means for receiving, from the terminal 20 of the shipping site 2, and inputting information relating to the shipped physical distribution container 3, when the physical distribution container 3 is transported. The information relating to the physical distribution container 3 is associated with the "slip number". In the case that the shipping site 2a has the RFID reader 21 installed therein so that container identification number is acquired for each physical distribution container 3 and the information of the number is transmitted, the shipment information input unit 12 receives and inputs the container identification number of the physical distribution container 3 shipped from the shipping site 2a. In other words, the shipment information input unit 12 is shipped-container information input means. On the other hand, in the case that the shipping site 2b does not have the RFID reader 21 and the number of shipped physical distribution containers 3 is transmitted, the shipment information input unit 12 receives and inputs the number of physical distribution containers 3 shipped from the shipping site 2b. In other words, the shipment information input unit 12 is number-of-shipments input means. The shipment information input unit 12 outputs the input information relating to the shipped physical distribution container 3 to the number-of-pieces determining unit 14.

The receipt information input unit 13 is also the means for receiving, from the terminal 20 of the shipping site 2, and inputting information relating to the received physical distribution container 3, when the physical distribution container 3 is transported. In the case where the shipping site 2a has the RFID reader 21 installed therein so that container identification number is acquired for each physical distribution container 3 and the information of the number is transmitted, the receipt information input unit 13 receives and inputs the container identification number of the physical distribution container 3 received in the receiving site 2a. In other words, the receipt information input unit 13 is received-container information input means. On the other hand, in the case where the receiving site 2b does not have the RFID reader 21 and the number of received physical distribution containers 3 is transmitted thereto, the receipt information input unit 13 receives and inputs the number of physical distribution containers 3 received in the receiving site 2b. In other words, the receipt information input unit 13 is number-of-receipts input means. The receipt information input unit 13 outputs the input information relating to the received physical distribution container 3 to the number-of-pieces determining unit 14.

The number-of-pieces determining unit 14 is the number-of-shipments determining means and number-of-receipts determining means for determining, based on the container identification number, the number of shipments or receipts of the physical distribution containers 3 at the shipping site 2a or the receiving site 2b for each of the shipments and receipts, if the information input from the shipment information input unit 12 or the receipt information input unit 13 includes the container identification number. The number-of-pieces determining unit 14 determines the number of shipments or receipts by counting the container identification number for each "slip number". The number-of-pieces determining unit 14 inputs the information input from the shipment information input unit 12 or the receipt information input unit 13, and information indicating the determined number of shipments and receipts into the shipment-and-receipt information management unit 15.

The shipment-and-receipt information management unit 15 is the means for registering the information input from the shipment information input unit 12 and the number-of-pieces determining unit 14 in the database 11 and performing required operation as necessary. Detailed description will be provided below. In addition, the shipment-and-receipt information management unit 15 is also number-of-shipments-and-receipts matching means for matching the number of shipments with the number of receipts, for each of the shipments and receipts. The shipment-and-receipt information management unit 15 also registers the result of matching in the database 11.

The inventory information input unit 16 is the containers-in-inventory information input means for receiving, from the terminal 20 of the site 2a, and inputting the container identification number of the physical distribution container 3 in inventory for each site 2a, when performing inventory-counting at the site 2a performing individual management of the physical distribution containers 3. The inventory information input unit 16 outputs the container identification number of the physical distribution container 3 in inventory input at each site 2a to the inventory information management unit 17.

The inventory information management unit 17 is the inventory matching means for matching the container identification number input from the inventory information input unit 16 and the container identification number stored in the database 11. The inventory information management unit 17 registers the result of matching in the database 11.

The output unit 18 is the output means for outputting information relating to management of the physical distribution container 3. Output by the output unit 18 is performed by acquiring information stored in the database 11 in response to a request from the terminal 20 and transmitting the information to the terminal 20 relating to the request. Specifically, the output unit 18 is the shipment and receipt output means for outputting the result of matching by the shipment-and-receipt information management unit 15. In addition, the output unit 18 is the inventory output means for outputting the result of matching by the inventory information management unit 17.

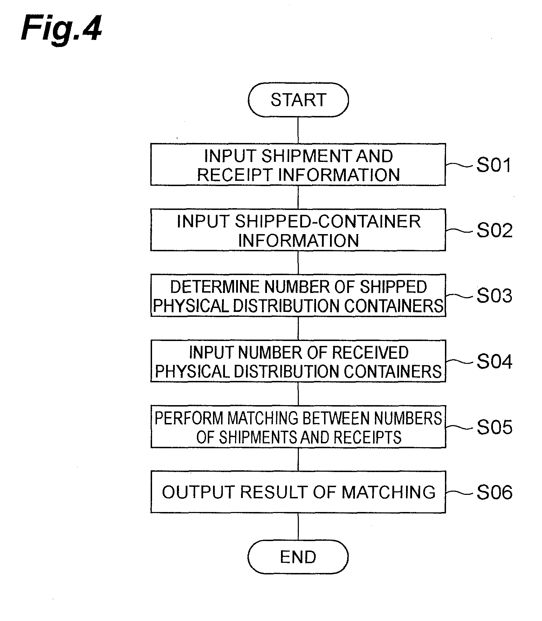

Subsequently, the process performed in the physical distribution container management system 1 according to the present embodiment will be described using a flow chart. First, a process is described of the case of shipping and receiving the physical distribution container 3 at the site 2b performing total volume management of the physical distribution containers 3 from the site 2a performing individual management of the physical distribution containers 3 using the flow chart of Fig. 4.

First, information relating to shipment and receipt is transmitted from the terminal 20 of the shipping site 2a to the physical distribution container management server 10. The information transmitted here relating to shipment and receipt includes the slip number specifying the shipment and receipt, the shipping site code, and the receiving site code. The transmission is effected by performing input and transmission operations to the terminal 20 by a user such as the supervisor at the shipping site 2a. In addition, the above-mentioned slip number is set to be uniquely distinguishable from other slip numbers. The slip number may be automatically set at the terminal 20 conforming to such a rule, instead of being input by the user.

In the physical distribution container management server 10, the shipment information input unit 12 receives information relating to shipment and receipt transmitted from the terminal 20 of the shipping site 2a (S01). The information is output to the shipment-and-receipt information management unit 15 from the shipment information input unit 12. Subsequently, shipment-and-receipt information 11a having the shipment/receipt classification set to "shipment" based on the above information is generated by the shipment-and-receipt information management unit 15 and stored in the database 11. The shipping site code, slip number, and receiving site code in this shipment-and-receipt information 11a are included in the information relating to the shipment and receipt transmitted from the terminal 20 of the shipping site 2a.

Subsequently, at the shipping site 2a, the container identification number is read by the RFID reader 21 from the RFID tag 4 of the shipped physical distribution container 3. The read-out container identification number is input in the terminal 20 from the RFID reader 21. In the terminal 20, shipped-container information is generated based on the input container identification number, and the shipped-container information is transmitted to the physical distribution container management server 10. As shown in Fig. 2 (a), the shipped-container information includes the shipping site code, the shipment date, the slip number, and the container identification number. Here, the slip number is input in the above mentioned manner. This transmission is performed at the shipping site 2a by a user such as the supervisor performing input and transmission operations to the terminal 20.

In the physical distribution container management server 10, the shipped-container information transmitted from the terminal 20 of the shipping site 2a is received by the shipment information input unit 12 (S02). The information is output to the number-of-pieces determining unit 14 from the shipment information input unit 12.

Subsequently, from the container identification number included in the input shipped-container information, the number of shipped physical distribution containers 3 relating to the shipment is determined by the number-of-pieces determining unit 14 (S03). This determination is performed by specifying the type of the physical distribution container 3 from the container identification number, and counting the number of container identification numbers for each type. The determined number-of-shipments information for each type of the physical distribution container 3 is input in the shipment-and-receipt information management unit 15 from the number-of-pieces determining unit 14. In addition, the shipped-container information is also input in the shipment-and-receipt information management unit 15.

The number of shipments for each type of the physical distribution container 3 input from the number-of-pieces determining unit 14 is included in the shipment-and-receipt information 11a of the same slip number in the database 11 by the shipment-and-receipt information management unit 15. Additionally, in the shipment-and-receipt information management unit 15, receipt-waiting-container information 11b of each physical distribution container 3 shown in Fig. 3 (b) is generated from the input shipped-container information. The processing at the shipping site 2a has thus been described. Subsequently, the physical distribution container 3 is transported from the shipping site 2a at the receiving site 2b.

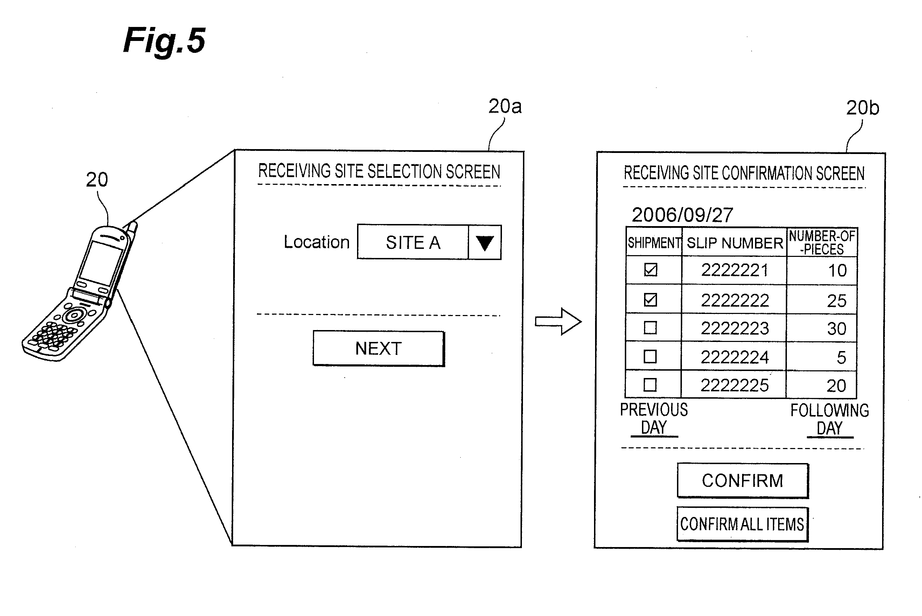

At the receiving site 2b, the number of received physical distribution containers 3 corresponding to the slip number relating to the shipment and receipt by the transportation is checked by a user such as the supervisor, and information of the number of receipts is input in the terminal 20 and transmitted to the physical distribution container management server 10. The number-of-receipts information is transmitted for each type of the physical distribution container 3. Additionally, when transmitting the number-of-receipts information, the slip number is also transmitted in association with the number-of-receipts information. When transmitting the number of receipts, transmission of the information may be performed by acquiring, from the physical distribution container management server 10, scheduled number-of-receipts information at the receiving site 2b by the terminal 20 of the receiving site 2b and replying to the acquired information. Fig. 5 illustrates a screen image 20a at the time of acquiring the scheduled number-of-receipts information and a screen image 20b of displaying the acquired information, accepting input from a user, and transmitting it to the physical distribution container management server 10.

In the physical distribution container management server 10, the number-of-receipts information of the physical distribution container 3 transmitted from the terminal 20 of the receiving site 2b is received by the receipt information input unit 13 (S04). The information is output to the number-of-pieces determining unit 14 from the receipt information input unit 13. Since this information is already converted into numerical information, it is output as it is to the shipment-and-receipt information management unit 15 from the number-of-pieces determining unit 14.

Subsequently, shipment-and-receipt information 11a having the shipment/receipt classification set to "receipt" based on the above information is generated by the shipment-and-receipt information management unit 15 and stored in the database 11. The slip number and the number-of-pieces for each type of the physical distribution container 3 in this shipment-and-receipt information 11a are included in the information transmitted from the terminal 20 of the shipping site 2a. Additionally, the shipping site code and the receiving site code may be acquired from the shipment-and-receipt information 11a of the same slip number having the shipment/receipt classification set to "receipt" and included in the shipment-and-receipt information 11a.

Subsequently, matching is performed between the number of shipments of the shipment-and-receipt information 11a having the shipment/receipt classification set to "receipt" and the number of receipts of the shipment-and-receipt information 11a of the same slip number that set shipment/receipt classification to "shipment" by the shipment-and-receipt information management unit 15, referring to the database 11 (S05). This matching is performed by determining whether or not the number of receipts and the number of shipments for each type of the physical distribution container 3 agree. Subsequently, information of the result of matching is generated by the shipment-and-receipt information management unit 15 and stored in the database 11. The information of the result of matching is generated for each slip number, and includes information with regard to agreement or disagreement and, in the case of disagreement, information with regard to which type of the physical distribution container 3 disagrees how much.

Subsequently, the result of matching is output by the output unit 18 (S06). The output of the result of matching is performed by receiving a request from the terminal 20 of the shipping site 2a or the receiving site 2b, acquiring the information of the result of matching from the database 11 in response to the request, and transmitting the information to the source of request. The output allows the user at the shipping site 2a and at the receiving site 2b to know whether or not shipment and receipt have been properly performed. If the result of matching indicates a disagreement, the physical distribution container management server 10 may receive, from the terminal 20 of the shipping site 2a or the receiving site 2b, a piece of information for correcting the information relating to shipment and receipt of the physical distribution container 3, and perform the matching again based on the piece of information. The process of shipping and receiving the physical distribution container 3 from the site 2a performing individual management of the physical distribution containers 3 to the site 2b performing total volume management of the physical distribution containers 3 has thus been described.

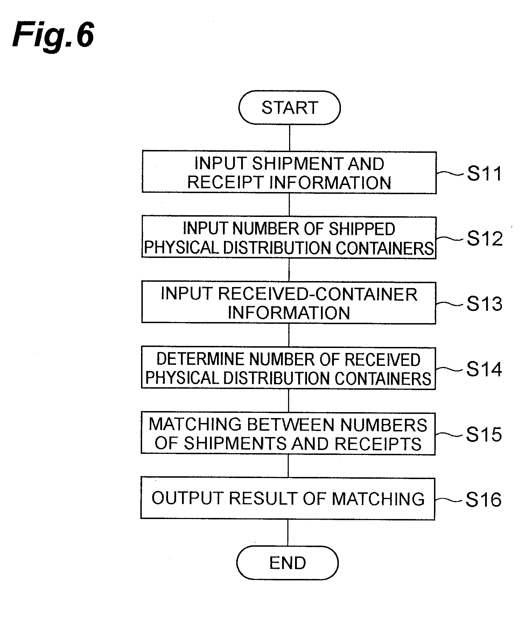

Subsequently, a process of shipping and receiving the physical distribution container 3 from the site 2b performing total volume management of the physical distribution containers 3 to the site 2a performing individual management of the physical distribution containers 3 will be described using the flow chart of Fig. 6.

First, information relating to shipment and receipt is transmitted from the terminal 20 of the shipping site 2b to the physical distribution container management server 10. The information transmitted here relating to shipment and receipt includes the slip number specifying the shipment and receipt, the shipping site code, and the receiving site code. The transmission is effected by performing input and transmission operations to the terminal 20 by a user such as the supervisor at the shipping site 2b. In addition, the above-mentioned slip number is set to be uniquely distinguishable from other slip numbers. The slip number may be automatically set at the terminal 20 conforming to such a rule, instead of being input by the user.

In the physical distribution container management server 10, the shipment information input unit 12 receives information relating to shipment and receipt transmitted from the terminal 20 of the shipping site 2b (S11). The information is output to the shipment-and-receipt information management unit 15 from the shipment information input unit 12. Subsequently, shipment-and-receipt information 11a having the shipment/receipt classification set to "shipment" based on the above information is generated by the shipment-and-receipt information management unit 15 and stored in the database 11. The shipping site code, slip number, and receiving site code in this shipment-and-receipt information 11a are included in the information relating to the shipment and receipt transmitted from the terminal 20 of the shipping site 2a.

Subsequently, at the shipping site 2b, the number of received physical distribution containers 3 is input in the terminal 20 and transmitted in association with the slip number to the physical distribution container management server 10 by a user such as the supervisor. The number-of-receipts information is transmitted for each type of the physical distribution container 3. In the physical distribution container management server 10, the number-of-receipts information of the physical distribution container 3 transmitted from the terminal 20 of the shipping site 2b is received by the shipment information input unit 12 (S12). The information is output to the number-of-pieces determining unit 14 from the shipment information input unit 12. Since this information is already converted into numerical information, it is output as it is to the shipment-and-receipt information management unit 15 from the number-of-pieces determining unit 14.

Subsequently, shipment-and-receipt information 11a having the shipment/receipt classification set to "receipt" based on the above information is generated by the shipment-and-receipt information management unit 15 and stored in the database 11. The slip number and the number-of-pieces for each type of the physical distribution container 3 in this shipment-and-receipt information 11a are included in the information transmitted from the terminal 20 of the shipping site 2a. Additionally, the shipping site code and the receiving site code may be acquired from the shipment-and-receipt information 11a of the same slip number having the shipment/receipt classification set to "receipt" and included in the shipment-and-receipt information 11a.

In the shipment-and-receipt information management unit 15, the number of shipments for each type of the physical distribution container 3 input from the number-of-pieces determining unit 14 is included in the shipment-and-receipt information 11a of the same slip number in the database 11. The processing at the shipping site 2a has thus been described. Subsequently, the physical distribution container 3 is transported from the shipping site 2b at the receiving site 2a.

At the receiving site 2a, the container identification number is read by the RFID reader 21 from the RFID tag 4 of the received physical distribution container 3. The read-out container identification number is input in the terminal 20 from the RFID reader 21. In the terminal 20, received-container information is generated based on the input container identification number, and the shipped-container information is transmitted to the physical distribution container management server 10. As shown in Fig. 2 (b), the received-container information includes the receiving site code, the receipt date, and the container identification number. If the shipping site 2b is a site performing total volume management, since the slip number cannot be specified only by the container identification number, information associating the container identification number with the slip number is transmitted together with the above mentioned received-container information from the terminal 20 of the receiving site 2a to the physical distribution container management server 10.

In the physical distribution container management server 10, the received-container information transmitted from the terminal 20 of the receiving site 2a is received by the receipt information input unit 13 (S13). The information is output to the number-of-pieces determining unit 14 from the shipment information input unit 12.

Subsequently, from the container identification number included in the input received-container information, the number of received physical distribution containers 3 relating to the shipment is determined by the number-of-pieces determining unit 14 (S14). This determination is performed by specifying the type of the physical distribution container 3 from the container identification number, and counting the number of container identification numbers for each type. The determined number-of-shipments information for each type of the physical distribution container 3 is input, together with the slit number information, in the shipment-and-receipt information management unit 15 from the number-of-pieces determining unit 14. In addition, the received-container information is also input in the shipment-and-receipt information management unit 15.

Subsequently, shipment-and-receipt information 11a having the shipment/receipt classification set to "receipt" based on the above information is generated by the shipment-and-receipt information management unit 15 and stored in the database 11. The slip number and the number-of-pieces for each type of the physical distribution container 3 in this shipment-and-receipt information 11a are included in the information input from the number-of-pieces determining unit 14. Additionally, the shipping site code and the receiving site code may be acquired from the shipment-and-receipt information 11a of the same slip number having the shipment/receipt classification set to "receipt" and included in the shipment-and-receipt information 11a.

At this point, in addition, the container-location information 11c in the database 11 shown in Fig. 3 (c) is updated by the shipment-and-receipt information management unit 15. The site code, the transit date, and the classification of the container-location information 11c corresponding to the container identification number input from the receiving site 2a are updated to the site code of the receiving site 2a, the receipt date, and "receipt", respectively.

Subsequently, matching is performed between the number of shipments of the shipment-and-receipt information 11a having the shipment/receipt classification set to "receipt", and the number of receipts of the shipment-and-receipt information 11a of the same slip number that set shipment/receipt classification to "shipment" by the shipment-and-receipt information management unit 15, referring to the database 11 (S15). This matching is performed by determining whether or not the number of receipts and the number of shipments for each type of the physical distribution container 3 agree. Subsequently, information of the result of matching is generated by the shipment-and-receipt information management unit 15 and stored in the database 11. The information of the result of matching is generated for each slip number, and includes information with regard to agreement or disagreement and, in the case of disagreement, information with regard to which type of the physical distribution container 3 disagrees how much.

Subsequently, the result of matching is output by the output unit 18 (S16). The output of the result of matching is performed by receiving a request from the terminal 20 of the shipping site 2b or the receiving site 2a, acquiring the information of the result of matching from the database 11 in response to the request, and transmitting the information to the requesting site. The output allows the user at the shipping site 2b and at the receiving site 2a to know whether or not shipment and receipt have been properly performed. If the result of matching indicates a disagreement, the physical distribution container management server 10 may receive, from the terminal 20 of the shipping site 2b or the receiving site 2a, a piece of information for correcting the information relating to shipment and receipt of the physical distribution container 3, and perform the matching again based on the piece of information. The process of shipping and receiving the physical distribution container 3 from the site 2b performing total volume management of the physical distribution containers 3 to the site 2a performing individual management of the physical distribution containers 3 has thus been described.

Management of the number of shipments and receipts between the sites 2a performing individual management and between the sites 2b performing total volume management can be performed, similarly as described above. When shipping and receiving the physical distribution container 3 between the sites 2a performing individual management, it is not necessary to transmit information associating the container identification number with the slip number when transmitting the received-container information from the terminal 20 of the receiving site 2a in S13. This is because the receipt-waiting-container information 11b for each physical distribution container 3, shown in Fig. 3 (b), holding the information associating the container identification number with the slip number is stored in the database 11 at the time point of shipment so that the slip number can be specified from the container identification number by referring to the receipt-waiting-container information 11b.

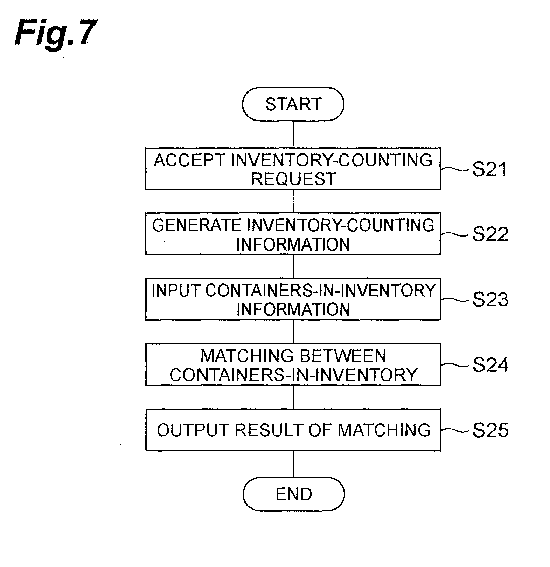

Subsequently, a process of inventory-counting of the physical distribution containers 3 at the site 2a performing individual management of the physical distribution containers 3 will be described using the flow chart of Fig. 7.

First, an inventory-counting request is transmitted to the physical distribution container management server 10 from the terminal 20 of the site 2a that performs inventory-counting. The inventory-counting request includes information of, a site code of the site 2a that performs inventory-counting, an inventory-counting starting date and an inventory-counting closing date. The transmission is effected by performing input and transmission operations to the terminal 20 by a user such as the supervisor at the shipping site 2a.

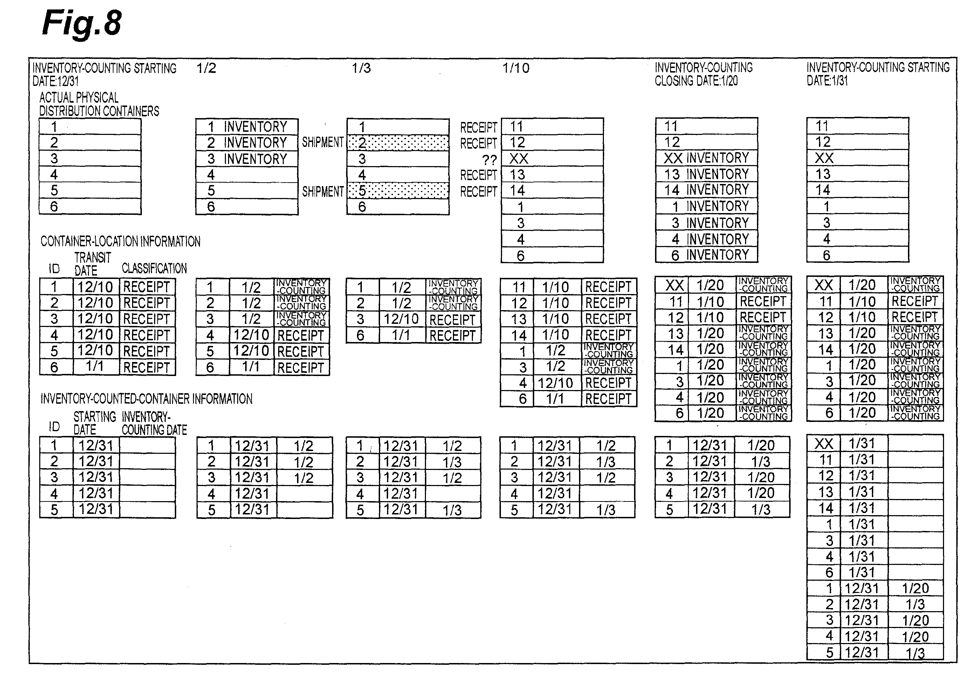

In the physical distribution container management server 10, an inventory-counting request is received by the inventory information input unit 16 (S21). The inventory-counting request is output to the inventory information management unit 17 from the inventory information input unit 16. Subsequently, inventory-counted-container information 11d shown in Fig. 3 (d) is generated based on the information and stored in the database 11, by the inventory information management unit 17 (S22). The inventory-counted-container information 11d is generated for each physical distribution container 3 by acquiring the container-location information 11c that has the site code being the site code relating to the inventory-counting request and corresponds to information of the physical distribution container 3 having a transit date preceding the inventory-counting starting date from the database 11. As shown in Fig. 8, for example, if the inventory-counting starting date is "12/31", inventory-counted-container information is generated for the physical distribution container 3 having IDs 1 to 5 (uniquely provided corresponding to the container identification number), whose transit date is "12/10".

Subsequently, at the site 2a, the container identification number is read by the RFID reader 21 from the RFID tag 4 of the physical distribution container 3 in inventory. The read-out container identification number is input in the terminal 20 from the RFID reader 21. In the terminal 20, containers-in-inventory information is generated based on the input container identification number, and the containers-in-inventory information is transmitted to the physical distribution container management server 10. As shown in Fig. 2 (c), the containers-in-inventory information includes the inventory-counting site code, the reading date, and the container identification number.

In the physical distribution container management server 10, the containers-in-inventory information transmitted from the terminal 20 of the site 2a is received by the inventory information input unit 16 (S23). The information is output to the inventory information management unit 17 from the inventory information input unit 16.

Subsequently, matching is performed between the container identification number included in the containers-in-inventory information input from the inventory information input unit 16 and the container identification number stored in the database 11 by the inventory information management unit 17 (S24). Specifically, this matching is performed by determining whether or not the container identification number included in the containers-in-inventory information input from the inventory information input unit 16 is included in the inventory-counted-container information 11d stored in the database 11. If, as shown in Fig. 8, the container identification number is read from the physical distribution container 3 having IDs 1 to 3 on "1/2", it is determined that the actual inventory agrees with the information in the database 11 because the container identification number of the physical distribution container 3 having IDs 1 to 3 is included in the inventory-counted-container information 11d. If the read-out container identification number is included in the inventory-counted-container information 11d, the inventory-counting date of the inventory-counted-container information 11d corresponding to the container identification number is set as the reading date by the inventory information management unit 17, whereby an inventory-counting flag is turned on. Additionally, as shown in Fig. 8, "classification" of the container-location information 11c in the database 11 corresponding to the container identification number is set to be "inventory-counting".

When the physical distribution container 3 relating to the container identification number included in the inventory-counted-container information 11d is shipped (the example of "1/3" shown in Fig. 8), the inventory-counting with regard to the physical distribution container 3 is treated as completed, because the container-location information has disappeared from the site 2a where the inventory-counting takes place due to shipment.

The above processes (S23, S24) are repeated whenever the containers-in-inventory information is transmitted from the site 2a to the physical distribution container management server 10.

In the matching by the inventory information management unit 17, for a case in which a physical distribution container 3 exists corresponding to a container identification number neither included in the inventory-counted-container information 11d nor in the container-location information 11c, or a case in which a physical distribution container 3 exists whose inventory-counting flag is not on although the inventory-counting closing date has arrived, information with regard to the foregoing is generated as the result of matching by the inventory information management unit 17. The information of the generated result of matching is stored in the database 11.

Subsequently, the result of matching is output by the output unit 18 (S25). The output of the result of matching is performed by receiving a request from the terminal 20 of the site 2a, acquiring the information of the result of matching from the database 11 in response to the request, and transmitting the information to the source of request. Alternatively, it may be transmitted from the output unit 18 to the terminal 20 of the site 2a on the inventory-counting closing date. The output allows the user at the site 2a to know whether or not the inventory at the site 2a agrees with the information in the database 11. If the result of matching indicates a disagreement, the physical distribution container management server 10 may receive, from the terminal 20 of the site 2a, a piece of information for correcting the information relating to inventory of the physical distribution container 3, and correct the inventory information based on the piece of information. The process of inventory-counting of the physical distribution container 3 at the site 2a performing individual management of the physical distribution containers 3 has thus been described.

With the physical distribution container management system 1 according to the present embodiment, as described above, the container identification number of the shipped and received physical distribution container 3 is input from a site performing individual management, and the number of shipments and receipts is determined based on the container identification number. In the physical distribution container management system 1, matching is performed using the number of shipment and receipts determined in such a manner. With the physical distribution container management system 1 according to the present embodiment, therefore, shipment and receipt of the physical distribution container 3 can be properly managed even if the physical distribution container 3 is shipped and received between the site 2a performing individual management of the physical distribution containers 3 and the site 2b performing total volume management.

In addition, by acquiring the container identification number from the RFID tag 4 by the RFID reader 21 as with the present embodiment, acquisition of the container identification number and transmission thereof to the physical distribution container management server 10 can be performed easily, whereby the present invention can be implemented with ease.

In addition, by performing matching with the inventory using the information of shipment and receipt as with the present embodiment, inventory-counting can be easily performed at the site 2a performing individual management.

Although the RFID tag 4 is used in the present embodiment as the medium for storing the container identification number, it does not necessarily have to be an RFID tag 4 and any medium that can store the container identification number suffices. For example, bar-codes may be used. In such a case, a bar code reader is used as the reader in place of the RFID reader 21.

## Claims

1. A physical distribution container management system that manages physical distribution containers shipped and received between a plurality of sites, the system comprising:
shipment-and-receipt information input means for inputting shipment-and-receipt-specific information that specifies shipment and receipt of the physical distribution containers;
shipped-container information input means for inputting container-specific information that specifies the physical distribution containers shipped from a shipping site relating to the shipment and receipt, in association with the shipment-and-receipt-specific information;
number-of-shipments determining means for determining, from the container-specific information input by the shipped-container information accepting means, number of the shipped physical distribution containers from the shipping site for each of the shipments and receipts;
number-of-receipts input means for inputting information indicating number of the received physical distribution containers at a receiving site relating to the shipment and receipt, in association with the shipment-and-receipt-specific information;
number-of-shipments-and-receipts matching means for matching the number of shipments determined by the number-of-shipments determining means and the number of receipts relating to information input by the number-of-receipts input means, for each of the shipments and receipts; and
shipment-and-receipt output means for outputting a result of matching by the number-of-shipments-and-receipts matching means.

2. The physical distribution container management system according to claim 1, further comprising a reader that reads the container-specific information from a medium attached to the physical distribution container and storing the container-specific information relating to the physical distribution container, and inputs the information in the shipped-container information input means.

3. A physical distribution container management system that manages physical distribution containers shipped and received between a plurality of sites, the system comprising:
shipment-and-receipt information input means for inputting shipment-and-receipt-specific information that specifies shipment and receipt of the physical distribution containers;
number-of-shipments input means for inputting information indicating number of the shipped physical distribution containers from a shipping site relating to the shipment and receipt, in association with the shipment-and-receipt-specific information;
received-container information input means for inputting container-specific information that specifies the physical distribution containers received at a receiving site relating to the shipment and receipt, in association with the shipment-and-receipt-specific information;
number-of-receipts determining means for determining, from the container-specific information input by the received-container information accepting means, number of the received physical distribution containers at the receiving site for each of the shipments and receipts;
matching means for matching the number of shipped containers relating to information input by the number-of-shipments input means and number of received containers determined by the number-of-receipts determining means for each of the shipments and receipts; and
output means for outputting a result of matching by the matching means.

4. The physical distribution container management system according to claim 3, further comprising a reader that reads the container-specific information from a medium attached to the physical distribution container and storing the container-specific information relating to the physical distribution container, and inputs the information in the received-container information input means.

5. The physical distribution container management system according to any one of claims 1 to 4, wherein the shipment-and-receipt-specific information contains information that identifies the shipping site and receiving site relating to the shipment and receipt, and the system further comprising:
inventory information storage means for storing, based on the input container-specific information, the container-specific information relating to the physical distribution containers that are in inventory at each of the sites;
containers-in-inventory information input means for inputting the container-specific information relating to the physical distribution containers that are in inventory at each of the sites;
inventory matching means for matching the container-specific information input by the containers-in-inventory information input means and the container-specific information stored by the inventory information storage means; and
inventory output means for outputting a result of matching by the inventory matching means.
